# EUROPÄISCHE PATENTSCHRIFT

(11) **EP 0 773 124 B1**
(45) Veröffentlichungstag und Bekanntmachung des Hinweises auf die Patenterteilung: **08.12.1999**
(21) Anmeldenummer: 96116385.4
(22) Anmeldetag: 12.10.1996
(51) Int. Cl.: B60H 3/06, B60H 1/00

(54) **Fahrzeugkabine**
Vehicle cab
Cabine de véhicule

(30) Priorität: 10.11.1995 DE 19541934
(43) Veröffentlichungstag der Anmeldung: 14.05.1997
(73) Patentinhaber: SAME DEUTZ-FAHR S.P.A., 24047 Treviglio (Bergamo) (IT)
(72) Erfinder: Mies, Peter, 50389 Wesseling (DE)
(74) Vertreter: Quinterno, Giuseppe

(56) Entgegenhaltungen:
- EP-A- 0 042 597
- EP-A- 0 438 076
- US-A- 4 763 564

## Beschreibung

Die Erfindung betrifft eine Fahrzeugkabine, insbesondere eines land- oder bauwirtschaftlichen Fahrzeuges, gemäß den Merkmalen des Oberbegriffes des Patentanspruches 1.

Aus der EP 0 438 076 ist eine Belüftungseinrichtung für Fahrzeugkabinen bekannt, bei der im Bereich zweier seitlicher, hinterer Kabineneckpfosten je einer der im wesentlichen vertikal verlaufenden Luftkanäle verläuft, an dessen unteren Ende sich ein Filtergehäuse anschließt, das ein Filterelement aufnimmt, welches durch einen vom Fahrzeugäußeren aus zu öffnenden Gehäusedeckel verschließbar ist. Weiterhin schließen sich dem Filtergehäuse untere Luftkanäle an, denen eine Klimatisiereinheit, die unter dem Fahrersitz angeordnet ist, nachgeordnet ist. Von dort aus wird die Luft über weitere Luftkanäle verschiedenen Luftaustrittsdüsen zugeführt. Die Luftkanäle sind dabei eigenständige Bau- bzw. Einzelteile.

Diese Anordnung hat den Nachteil, daß im Bereich der Heckpfosten, in dem bei der Arbeit mit dem Fahrzeug Staubwirbel entstehen, dieser Staub und gröbere Schmutzpartikel über den Luftkanal angesaugt werden. Diese werden zwar weitestgehend von dem Filterelement herausgefiltert, jedoch setzt sich der vertikal verlaufende Luftkanal mit den Schmutzpartikeln und dem Staub zu. Wird das Filterelement nicht rechtzeitig gewechselt bzw. gereinigt, kommt es zu einer kompletten Verstopfung des vertikal verlaufenden Luftkanales.

Darüber hinaus ist es von Nachteil, daß die vertikal und horizontalen Luftkanäle, die der Klimatisiereinheit vor- bzw. nachgeordnet sind, als zusammensteckbare Einzelteile ausgebildet sind, die extra montiert werden müssen, so daß hierdurch ein höherer Montageaufwand und eine höhere Ersatzteilvorhaltung, was beides kostenintensiv ist, erforderlich ist.

Die EP-A2-42 597, die zur Abgrewzung des Oberbegriffes des Anspruchs 1 benutzt ist, offenbart eine Luftverteileinrichtung für das Fahrerhaus eines landwirtschaftlichen Fahrzeugs, bei dem die Luft über ein Filterelement angesaugt und über Luftkanäle in den Bereich des Bodens der Fahrzeugkabine geleitet wird. Ein Teil des Luftkanals wird von einer Komponente des Fahrzeugs gebildet.

Der Erfindung liegt die Aufgabe zugrunde, eine Fahrzeugkabine, insbesondere eines land- oder bauwirtschaftlichen Fahrzeuges, mit einer Belüftungsanlage derart auszugestalten, die einfach gebaut ist, schnell montierbar ist sowie in Bezug auf die Ansaugung der Luft einen effizienten Wirkungsgrad ermöglicht.

Diese Aufgabe ist durch die Merkmale des Patentanspruches 1 gelöst.

Dadurch, daß das Filterelement in einer Säule der Fahrerkabine angeordnet und der Luftkanal zumindest teilweise von einer Komponente der Fahrzeugkabine selbst gebildet ist, können diese Teile einfach in die Fahrzeugkabine integriert werden, so daß ein weiterer Materialaufwand für externe Luftkanäle sowie der entsprechend erforderliche Montageaufwand entfällt.

Die Komponente ist dabei ein Verkleidungselement des Inneren der Fahrzeugkabine. In der Regel werden Fahrzeugkabinen von Fahrzeugen aus Rohteilen hergestellt, die beispielsweise von außen lackiert und von innen verkleidet werden. Daher wird zumindest ein Teil des Verkleidungselementes als Luftkanal ausgebildet, wobei beispielsweise, wie es in weiteren Ausgestaltungen der Erfindung vorgesehen ist, der Luftkanal zumindest von einem weiteren Teil des Fahrzeuges, insbesondere einem Radkasten, gebildet ist und/oder zumindest teilweise die Säule, insbesondere ein B-Säule, ist. Dies hat den Vorteil, daß im Zusammenspiel der Komponente der Fahrzeugkabine und einem Verkleidungselement der Luftkanal einfach realisierbar ist.

Bei einem Ausführungsbeispiel kann man die Erfindung vereinfacht dadurch darstellen, daß z.B. die B-Säule des Fahrzeuges, wobei die B-Säule die Komponente der Fahrzeugkabine ist, den Luftkanal bilden. Dabei ist der Luftkanal durch einen Radkasten und einem zu dem Radkasten auf Distanz angeordneten Verkleidungselement gebildet, das dichtend auf dem Radkasten angeordnet ist, so daß die Luftführung gewährleistet ist.

Weitere erfindungsgemäße Ausgestaltungen und ein konkretes Ausführungsbeispiel ist im folgenden im Rahmen der Figurenbeschreibung ausgeführt. Es zeigen:
- Fig. 1:: Querschnitt einer Fahrzeugkabine,
- Fig. 2:: Querschnitt durch die Baueinheit Radkasten-Verkleidungselement.

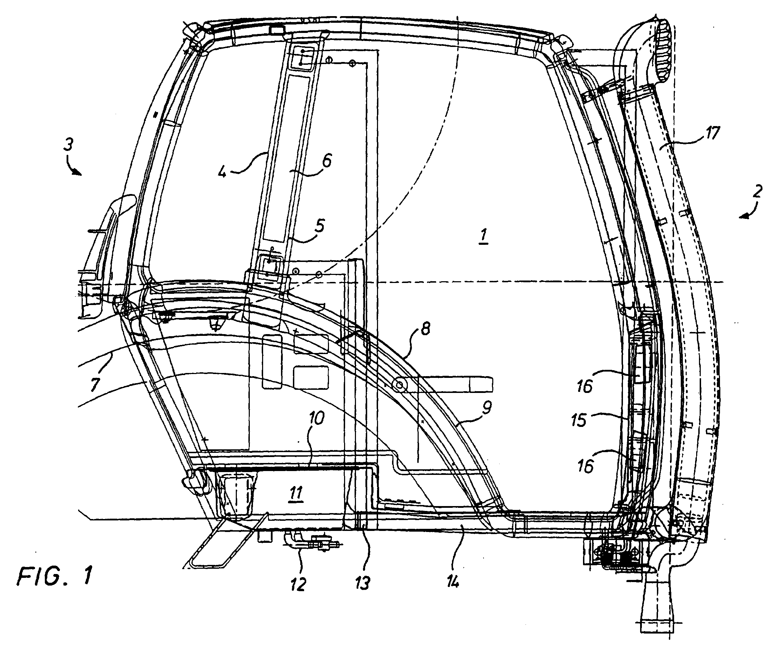

Figur 1 zeigt eine Fahrzeugkabine 1 im Querschnitt, die mit einem Frontbereich 2 in Richtung des Vorderendes des landwirtschaftlichen Fahrzeuges zeigt und dem Frontbereich abgewandt einen Heckbereich 3 aufweist. Im Frontbereich 2 ist die nicht näher bezeichnete A-Säule und im Heckbereich 3 die ebenfalls nicht näher bezeichnete C-Säule angeordnet, während dazwischenliegend eine B-Säule 4 angeordnet ist. Diese B-Säule 4 besteht beispielsweise aus einem in etwa rechteckigen Hohlprofil, der mit den übrigen Rahmenteilen (z.B. Dachrahmen) ein Grundgerüst für die Fahrzeugkabine 1 darstellt. Die B-Säule 4 weist einen Ausschnitt 5 auf, der nach außen gerichtet ist, um in diesem Ausschnitt 5 ein Filterelement 6 (zum Wechseln herausnehmbar) angeordnet ist.

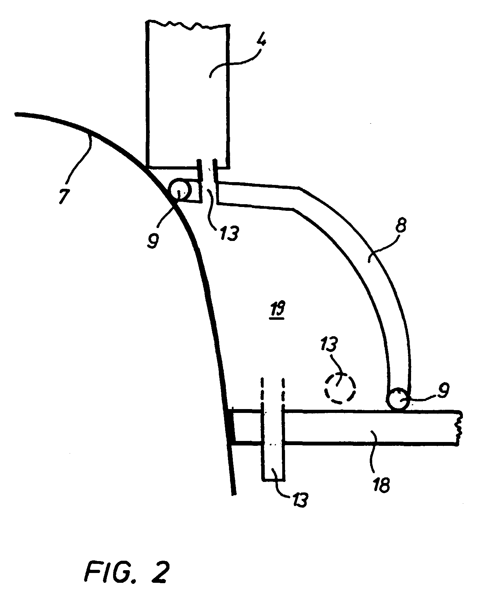

Zu der Fahrzeugkabine 1 gehört ein Radkasten 7, der sich ausgehend von dem Heckbereich 3 in Richtung des Frontbereiches 2 gerundet erstreckt. Die prinzipielle Ausgestaltung und Anordnung eines solchen Radkastens 7 ist an sich bekannt. Der Radkasten 7 ist im Inneren der Fahrzeugkabine 1 mit einer Radkastenabdeckung 8 versehen, wobei diese Radkastenabdeckung 8 an den Rändern eine Dichtung 9 aufweist, was in Figur 2 noch näher gezeigt ist.

In einem Bodenbereich der Fahrzeugkabine 1 befindet sich ein Gehäuse 10, das von dem Bodenbereich gebildet ist oder extra einsetzbar ist. In dem Gehäuse 10 ist eine nicht näher dargestellte Klimatisiereinrichtung 11 angeordnet, die an sich bekannte Komponenten für die Belüftung bzw. Klimatisierung der Fahrzeugkabine 1 enthält. Unterhalb des Gehäuses 10 sind Anschlußstutzen 12 angeordnet, während weitere Anschlußstutzen 13 seitlich, insbesondere in Richtung des Frontbereiches 2, aus dem Gehäuse 10 herausgeführt sind. Über die Anschlußstutzen 12 werden die nicht weiter bezeichneten Komponenten der Klimatisiereinrichtung 11 versorgt, während es sich bei dem Anschlußstutzen 13 um einen solchen handelt, an dem ein weiterer Luftkanal 14 angeschlossen ist. Dieser Luftkanal 14, der unterhalb des Bodens der Fahrzeugkabine 1 angeordnet ist, erstreckt sich bis in den Frontbereich 2 und anschließend daran vertikal nach oben in Richtung von Luftaustritten 15, die sich beispielsweise in einer Steuerkonsole im Inneren der Fahrzeugkabine 1 befinden. Diese Steuerkonsole nimmt ebenfalls in an sich bekannter Weise Elemente wie das Cockpit, Schalter sowie das Lenkrad und weitere Komponenten auf. Die Luftaustritte 15 sind in Richtung des Heckbereiches 3 gerichtet, während weitere Luftaustritte 16 von dem Luftkanal 14 versorgt werden, die die zugeführte Luft seitlich abstrahlen.

Figur 2 zeigt im Querschnitt die Baueinheit Radkasten und Radkastenabdeckung. An der B-Säule 4 liegt der Radkasten 7 an, wobei die konstruktive Befestigung nicht näher dargestellt ist. Die Radkastenabdeckung liegt über Dichtungen 9 an dem Radkasten 7 und an einer Bodengruppe 18 an, wobei es auch denkbar ist, daß beide Dichtungen an dem Radkasten anliegen. Durch diese Baueinheit ist eine Luftführung 19 gegeben, so daß unter Vermeidung von extra für die Luftführung ausgebildeten Luftkanälen diese Luftkanäle bzw. Luftführungen von Komponenten der Fahrzeugkabine selbst gebildet sind.

Bei diesem Ausführungsbeispiel erfolgt die Luftführung von der Ansaugung bis zum Luftaustritt in die Fahrzeugkabine wie folgt:

Über das Filterelement 6 wird Luft aus dem Außenbereich der Fahrzeugkabine an einer Stelle, an der wenig Verschmutzungen herrschen, angesaugt, gereinigt und über den Anschlußstutzen 13 (Figur 2, zwischen B-Säule 4 und Luftführung 19) in den Raum geführt, der durch die distanzierte Anordnung der Radkastenabdeckung in Bezug auf den Radkasten 7 gebildet ist. Von dort aus gelangt die Luft zu einer Belüftungseinrichtung (beispielsweise Ventilator) oder zu der Klimatisiereinrichtung, wo die Luft erwärmt, abgekühlt und gegebenenfalls ihr Feuchtegehalt beeinflußt wird. Von dort aus gelangt die temperierte Luft über den Luftkanal, der in der Bodengruppe 18 integriert oder von der Bodengruppe 18 gebildet ist, zu der Steuerkonsole, in der die Luftaustritte 15 und 16 angeordnet sind. Weitere Luftaustritte, insbesondere an anderen Orten innerhalb der Fahrzeugkabine 1 sind selbstverständlich denkbar. An den Luftaustritten 15 bzw. 16 kann ein Lüftungsgitter vorgesehen werden, das verstellbar ist und somit eine Regulierung des Volumens der austretenden Luft gestattet.

Ergänzend sei noch darauf hingewiesen, daß an der Fahrzeugkabine 1 im Frontbereich 2 ein Luftansaugrohr 17 angeordnet ist, von dem aus die angesaugte Luft in den Bereich des Gehäuses 10 bzw. der Klimatisiereinrichtung 11 geführt werden kann.

## Patentansprüche

1. Belüftungseinrichtung für eine Fahrzeugkabine (1), insbesondere eines land- oder bauwirtschaftlichen Fahrzeuges, bei der die Luft über ein Filterelement (6) angesaugt und über Luftkanäle in den Bereich des Bodens der Fahrzeugkabine (1) geführt ist und wenigstens einer der Luftkanäle zumindest teilweise von einer Komponente der Fahrzeugkabine (1) selbst gebildet ist, wobei die Komponente ein Verkleidungselement des Innenbereichs der Fahrzeugkabine (1) ist, dadurch gekennzeichnet, daß das Filterelement (6) in einer Säule (4) der Fahrzeugkabine (1) angeordnet ist und daß das Verkleidungselement des Innenbereichs der Fahrzeugkabine (1) eine Radkastenabdeckung (8) ist.

2. Belüftungseinrichtung nach Anspruch 1, dadurch gekennzeichnet, daß ein Teil des Luftkanals von einem Radkasten (7) gebildet, ein Teil einer Bodengruppe (18) und/oder eine Steuerkonsole (15) ist.

3. Belüftungseinrichtung nach einem der vorhergehenden Ansprüche, dadurch gekennzeichnet, daß ein Teil des Luftkanals zumindest teilweise die Säule (4), insbesondere eine B-Säule, ist.

4. Belüftungseinrichtung nach einem der vorhergehenden Ansprüche, dadurch gekennzeichnet, daß der Luftkanal zu einer in einem Gehäuse (10) angeordneten Klimatisiereinrichtung (11) hin- bzw. von dieser zu Luftaustritten (16) wegführt.

5. Belüftungseinrichtung nach einem der vorhergehenden Ansprüche, dadurch gekennzeichnet, daß die Klimatisiereinrichtung (11) vormontiert in dem Gehäuse (10) angeordnet ist, wobei das Gehäuse (10) zumindest Anschlußstutzen (12, 13) aufweist.

6. Belüftungseinrichtung nach einem der vorhergehenden Ansprüche, dadurch gekennzeichnet, daß zwischen der Radkastenabdeckung (8), und dem weiteren Teil des Fahrzeuges, eine umlaufende Dichtung angeordnet ist.

## Claims

1. A ventilation device for a vehicle cab (1), in particular of an agricultural or construction vehicle, in which the air is drawn in via a filter element (6) and is conveyed via air ducts into the region of the floor of the vehicle cab (1) and at least one of the air ducts is formed at least partly by a component of the vehicle cab (1) itself, the component being a covering element of the inner region of the vehicle cab (1),
**characterised in that** the filter element (6) is disposed in a column (4) of the vehicle cab (1)
**and in that** the covering element of the inner region of the vehicle cab (1) is a wheel housing cover (8).

2. A ventilation device according to Claim 1,
**characterised in that** one part of the air duct is formed by a wheel housing (7), one part by an underbody (18) and/or a control panel (15).

3. A ventilation device according to one of the preceding Claims,
**characterised in that** one part of the air duct is at least partially, the column (4), in particular a B-column.

4. A ventilation device according to one of the preceding Claims,
**characterised in that** the air duct leads to an air conditioning device (11) disposed in a housing (10) and respectively away therefrom to air outlets (16).

5. A ventilation device according to one of the preceding Claims,
**characterised in that** the air conditioning device (11) is premounted in the housing (10), the housing (10) having at least connection pieces (12, 13).

6. A ventilation device according to one of the preceding Claims,
**characterised in that** a circumferential seal is disposed between the wheel housing cover (8) and the further part of the vehicle.

## Revendications

1. Dispositif d'aération, pour une cabine de véhicule (1), notamment d'un véhicule agricole ou d'un véhicule de l'industrie du bâtiment, dans lequel l'air est aspiré en passant à travers un élément de filtre (6) et est envoyé dans la zone du plancher de la cabine de véhicule (1) en passant par des conduits d'air et au moins l'un des conduits d'air est formé, au moins en partie, par un élément constitutif de la cabine de véhicule (1) elle-même, l'élément constitutif étant un élément d'habillage de la zone intérieure de la cabine de véhicule (1), caractérisé en ce que l'élément de filtre (6) est disposé dans une colonne (4) de la cabine de véhicule (1) et en ce que l'élément d'habillage de la zone intérieure de la cabine de véhicule (1) est un recouvrement de passage de roue (8).

2. Dispositif d'aération suivant la revendication 1, caractérisé en ce qu'une partie du conduit d'air est formée d'un passage de roue (7), est une partie d'un groupe de plancher (18) et/ou un tableau de bord (15).

3. Dispositif d'aération suivant l'une des revendications précédentes, caractérisé en ce qu'une partie du conduit d'air est, au moins en partie, la colonne (4), notamment une colonne B.

4. Dispositif d'aération suivant l'une des revendications précédentes, caractérisé en ce que le conduit d'air mène à un dispositif de climatisation (11) disposé dans un boîtier (10) et mène de celui-ci à des sorties d'air (16).

5. Dispositif d'aération suivant l'une des revendications précédentes, caractérisé en ce que le dispositif de climatisation (11) est disposé, d'une manière préassemblée, dans le boîtier (10), le boîtier (10) comportant au moins des raccords (12, 13).

6. Dispositif d'aération suivant l'une des revendications précédentes, caractérisé en ce qu'une garniture d'étanchéité faisant tout le tour est disposée entre le recouvrement de passage de roue (8) et la partie restante du véhicule.
